(19) **Europäisches Patentamt / European Patent Office / Office européen des brevets**

(11) **EP 1 447 783 B1**

(12) **EUROPEAN PATENT SPECIFICATION**

(45) Date of publication and mention
of the grant of the patent:
**28.08.2013 Bulletin 2013/35**

(51) Int Cl.:
***G09B 9/058*** *(2006.01)*     ***G09B 19/16*** *(2006.01)*
***A63F 13/06*** *(2006.01)*     ***A63F 13/10*** *(2006.01)*

(21) Application number: **04002451.5**

(22) Date of filing: **04.02.2004**

(54) **Riding simulation apparatus**

Motorrad Fahrsimulator

Simulateur de conduite de moto

(84) Designated Contracting States:
**DE FR IT**

(30) Priority: **14.02.2003 JP 2003037489**

(43) Date of publication of application:
**18.08.2004 Bulletin 2004/34**

(73) Proprietor: **HONDA MOTOR CO., LTD.**
**Tokyo (JP)**

(72) Inventors:
• **Aoki, Katsuhito**
**Wako-shi**
**Saitama (JP)**

• **Ichimi, Sadanao**
**Wako-shi**
**Saitama (JP)**
• **Miyamaru, Yukio**
**Wako-shi**
**Saitama (JP)**

(74) Representative: **Liska, Horst et al**
**Weickmann & Weickmann**
**Patentanwälte**
**Postfach 86 08 20**
**81635 München (DE)**

(56) References cited:
EP-A- 1 142 617     WO-A-92/02916
DE-A1- 4 226 776     US-A- 5 125 843

**Description**

This invention relates to a riding simulation apparatus wherein a riding sight is displayed as a screen image on a display unit based on a driving operation of a simulated driving mechanism by an operator to allow the operator to pseudo-experience the riding state of a two-wheeled vehicle, and more particularly to a riding simulation apparatus which can provide an efficient guidance to the operator upon reproduction of a screen image after the pseudo-experience comes to an end.

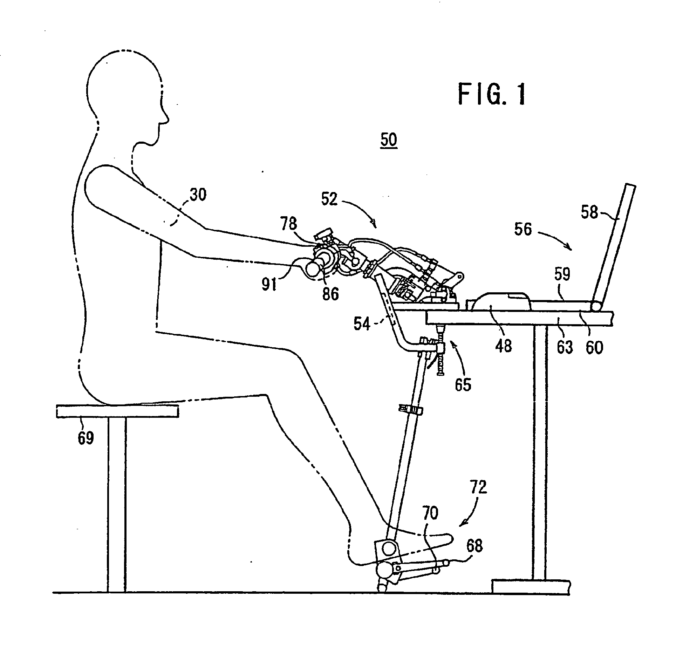

Conventionally, a riding simulation apparatus wherein, when an operator performs various driving operations of a two-wheeled vehicle, various riding states are displayed on a display unit to allow the operator to pseudo-experience the riding states of the two-wheeled vehicle is adopted for the object of driving education and so forth of a two-wheeled vehicle (refer to, for example, Japanese Patent Laid-Open No. 2002-297017 (paragraphs [0019] to [0021], [0034], [0049] to [0051], [0064], FIG. 1)

As shown in FIG. 14, the riding simulation apparatus 2 disclosed in the Patent Document 1 includes a control mechanism 6 installed on a floor face 4, and a motion unit section 10 removably connected to the control mechanism 6 by a connection mechanism 8. The riding simulation apparatus 2 further includes an instructor apparatus 14 formed from a personal computer or the like and connected to the control mechanism 6 through a communication line 12.

The control mechanism 6 includes a body section 20 in which the control circuit 16 and a CGI (computer generated image) apparatus 18 are accommodated, and a display box 24 provided above the body section 20 and having a display unit 22 of the projection type accommodated therein. A display apparatus 26 is formed from the display unit 22 and the CGI apparatus 18.

The motion unit section 10 includes a base 28. The base 28 has mounted thereon a simulated two-wheeled vehicle 32 which can be steered by an operator 30 and a drive mechanism 34 which drives the simulated two-wheeled vehicle 32 in conformity with behaviors of an actual two-wheeled vehicle.

The drive mechanism 34 basically includes a steering motor 38 for providing reactive force to a rotating operation of a handle bar 36 of the operator 30, a pitch motor 40 for providing reactive force in a pitching direction in response to an operation of a brake lever, and a roll motor 42 for providing reactive force to a movement of the weight of the operator in a rolling direction. Output signals from the simulated two-wheeled vehicle 32 such as an output signal of the steering motor 38 are transmitted to the control circuit 16.

In the riding simulation apparatus 2 having the configuration described above, various operations such as an operation of the handle bar 36 and an operation of a throttle grip 44 by the operator 30 are performed. When each such operation is performed, current behavior information data of the simulated two-wheeled vehicle 32 are supplied on the real time basis from the control circuit 16 to the CGI apparatus 18. In response to the behavior information data, a screen image of a riding route including screen images of the simulated two-wheeled vehicle, a landscape and other vehicles based on the riding state of the simulated two-wheeled vehicle 32, that is, a screen image of a so-called simulation (simulated riding) situation, is displayed on the real time basis on the display unit 22. Consequently, the operator 30 can have a riding feeling equivalent to that which the operator 30 can have with an actual vehicle.

The screen image of a simulation situation is displayed similarly also on a monitor 45 of the instructor apparatus 14, and data representative of the screen image of the simulation situation (screen image data of the simulation situation) are stored in detail in time series into a memory of the instructor apparatus 14.

The screen image data of the simulation situation stored in the memory of the instructor apparatus 14 can be reproduced, that is, replayed, on the screens of the display unit 22 and the monitor 45. Upon such reproduction, an instructor 46 can operate a mouse 48 or a touch panel on the monitor 45 to suitably stop the reproduction screen, vary the position of the eye point of the bird's eye view or perform some other operation to give an advice to the operator 30 to guide the operator 30.

However, with the apparatus disclosed in the Patent Document 1 specified above, since the instructor apparatus 14 used by an instructor to give an advice is required, the fabrication cost is comparatively high. Further, since an instructor who gives an advice is required, also the operation cost is high.

The present invention has been made taking such a subject as described above into consideration, and it is an object of the present invention to provide a riding simulation apparatus and process by which an operator can be guided even if an instructor is absent.

US 5 125 843 and EP 1 142 617 A1 refer to the hardware of motorcycle simulator controllers only.

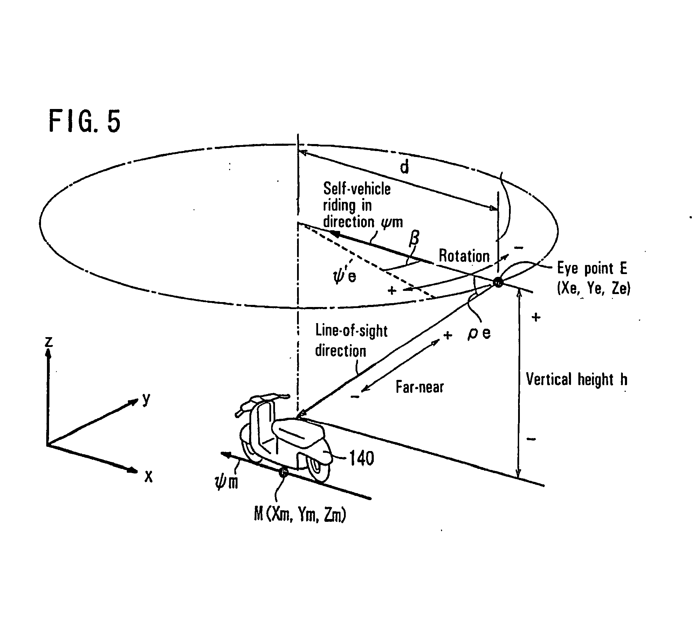

WO 92/02916 shows a simulator for a car racing and training system with a timing function for comparing a previous lap time with the current lap time (see Fig. 5), but without the function of repeated reproduction of previous riding scenes.

DE 42 26 776 A shows a riding simulator displaying a bird's eye view.

It is another object of the present invention to provide a riding simulation apparatus and process which can eliminate the necessity for an instructor apparatus.

It is a further object of the present invention to provide a riding simulation apparatus and process which can reduce the reproduction time required for guidance.

According to the present invention, there is provided a riding simulation apparatus in accordance with claim 1.

Further, there is provided a riding simulation process in accordance with claim 6.

According to the present invention, upon pseudo-experience, after an advice sentence is selected from a riding result by driving operation by an operator at a guidance scene determined in advance in a riding route, when the guidance scene is passed upon reproduction on the display unit, a riding sight and the advice sentence are displayed simultaneously. Consequently, the operator can confirm the screen image at the guidance scene and the advice sentence simultaneously. Consequently, understanding of the operator is facilitated and a high degree of persuasion is obtained.

In this instance, where the means for selecting an advice sentence selects only a scene at which an unsafe action was performed from within the simulated running result by the driving operation of the operator at the guidance scene and an advice sentence and the means for displaying the riding sight and the advice sentence simultaneously displays only the scene at which the unsafe action was performed, the operator observes only a scene at which the guidance is required. Consequently, the time required for the guidance can be reduced (invention as set forth in claim 2).

Further, where the riding simulation apparatus further includes means for reading aloud the advice sentence by voice upon reproduction on the display unit, the understanding is further facilitated (invention as set forth in claim 3).

Furthermore, where the reproduction is temporarily stopped and a still screen image is displayed when the riding sight and the advice sentence are displayed simultaneously upon reproduction on the display unit, the operator can confirm the guidance scene screen image and the guidance advice sentence with a higher degree of certainty (invention as set forth in claim 4).

Further, where, upon reproduction, the guidance scene screen image is reproduced by reproduction at the normal reproduction speed or by reproduction of a temporarily stopping still screen image, and the screen image other than the guidance scene screen image is reproduced by fast-feeding reproduction or by skipping reproduction, the guidance scene screen images can be confirmed in a concentrated manner in a short period of time (invention as set forth in claim 5). It is to be noted that, upon fast-feeding reproduction, the fast-feeding speed is not limited to a fixed speed, but otherwise, for example, the fast-feeding speed during stopping of the vehicle can be set to a higher speed in response to the riding situation.

According to the present invention, the following advantages can be achieved.

When a guidance scene is passed upon reproduction on the display unit, a riding sight and an advice sentence are displayed simultaneously. Consequently, the operator can confirm the screen image at the guidance scene and the advice sentence simultaneously. Consequently, understanding of the operator is facilitated and a high degree of persuasion is obtained.

As a result, the necessity for an instruction apparatus with which an instructor gives an advice is eliminated, and the fabrication cost can be reduced. Besides, even if an instructor who gives an advice is absent, the operator can enjoy the guidance efficiently.

The riding simulation apparatus of the present invention can be applied suitably to a simulation for education for the traffic safety.

In the following, a riding simulation apparatus according to an embodiment of the present invention is described in detail with reference to the accompanying drawings.

FIG. 1 is a view showing a general configuration of a riding simulation apparatus according to an embodiment of the present invention.

FIG. 2 is a perspective view of a simulated driving mechanism which composes the riding simulation apparatus of the example of FIG. 1.

FIG. 3 is a block diagram of a control circuit of the riding simulation apparatus of the example of FIG. 1.

FIG. 4 is a schematic view showing an experience riding route.

FIG. 5 is a diagrammatic view illustrating a manner of determining an eye point when a bird's eye view screen image is produced.

FIG. 6 is a schematic view showing an example of a bird's eye view screen image screen.

FIG. 7 is a view showing a manner of determining an eye point.

FIG. 8 is a view illustrating a table representative of results of experience riding on guidance scenes.

FIG. 9 is a flow chart for bird's eye view screen image production upon reproduction.

FIG. 10 is a schematic view showing an example of a reproduction screen which includes an advice sentence.

FIG. 11 is a schematic view of the reproduction screen of the example of FIG. 10 but shown with the bird's eye view eye point varied.

FIG. 12 is a schematic view of the reproduction screen of the example of FIG. 10 but shown with the bird's eye view eye point varied.

FIG. 13 is a schematic view of an example of the reproduction screen of an unsafe riding result of the example of FIG. 10.

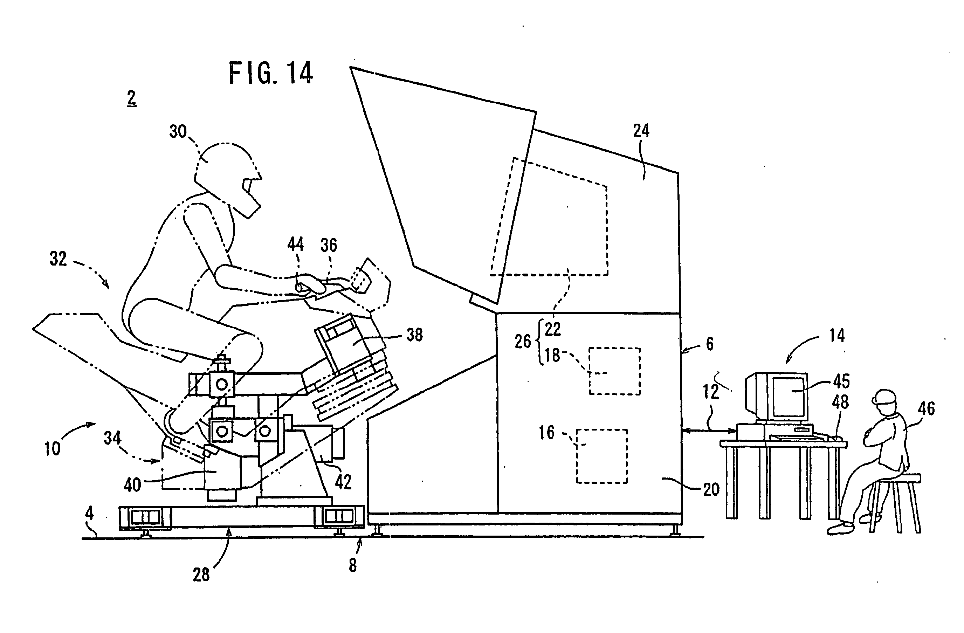

FIG. 14 is a schematic view of a riding simulation apparatus according to the prior art.

FIG. 1 illustrates an experiencing state of simulated driving or a reproduction state (replaying state) after simulated driving by an operator (driving person) 30 such as a rider of a riding simulation apparatus 50 of the present embodiment.

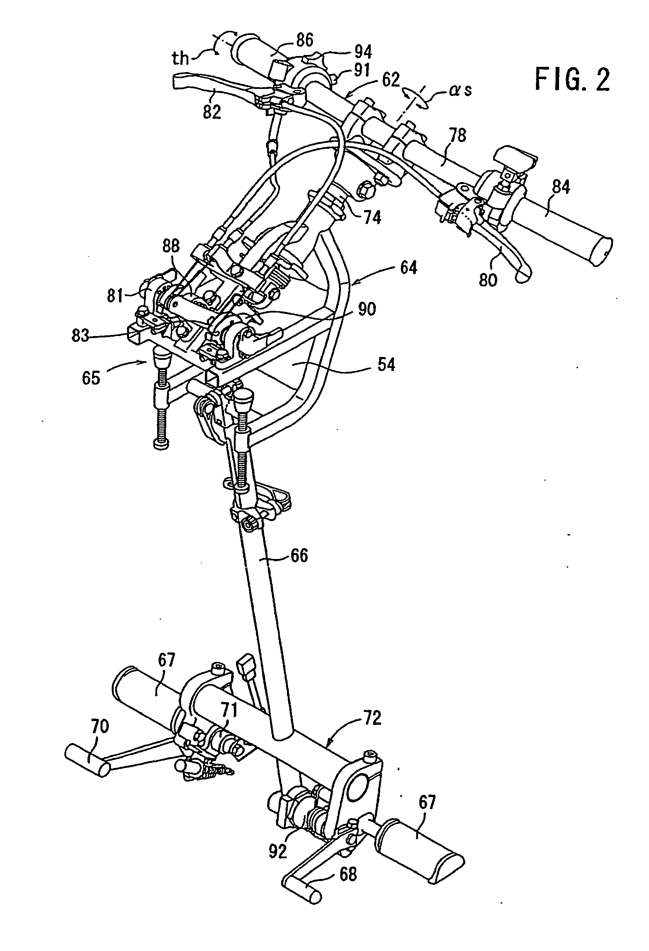

FIG. 2 shows a configuration as viewed in perspective of a simulated driving mechanism 52 which composes the riding simulation apparatus 50.

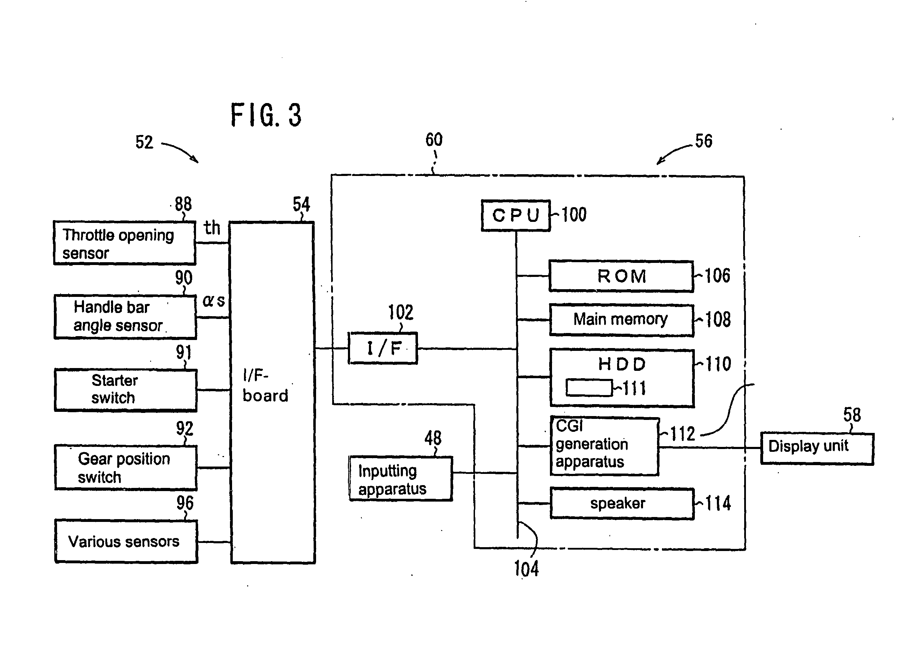

FIG. 3 shows a block diagram of a control circuit of the riding simulation apparatus 50.

As shown in FIG. 1, the riding simulation apparatus 50 basically includes a simulated driving mechanism 52 for being operated for driving by the operator 30 sitting on a seat 69, and a control apparatus 56 such as a personal computer (PC) electrically connected to an interface board 54 of the simulated driving mechanism 52.

The control apparatus 56 includes a display unit 58 in the form of a liquid crystal display apparatus, a mouse 48 and a keyboard 59 serving as inputting apparatus, and an apparatus body 60.

As shown in FIG. 2, the simulated driving mechanism 52 includes a handle bar mechanism 62, a frame body 64, a connection shaft 66, and a step mechanism (pedal mechanism) 72. The handle bar mechanism 62 is gripped by the hands of the operator 30 for operating to steer the front wheel of a two-wheeled vehicle displayed on the display unit 58. The frame body 64 supports the handle bar mechanism 62 for rotation over a predetermined angle. The connection shaft 66 is mounted for tilting motion and compression and expression motion on the frame body 64. The step mechanism (pedal mechanism) 72 is disposed at a lower end portion of the connection shaft 66 and includes a pair of steps 67, a gear change pedal 68 and a rear brake pedal 70.

The simulated driving mechanism 52 having such a configuration as described above is mounted on and used together with a table 63 by a mounting mechanism 65 as shown in FIG. 1. The control apparatus 56 connected to the interface board 54 of the simulated driving mechanism 52 by an electric cable is disposed at a desired position on the table 63 at which the operator 30 can observe the display unit 58 well.

Referring to FIG. 2, the handle bar mechanism 62 which composes the simulated driving mechanism 52 includes a steering stem 74, a steering handle bar 78, a clutch lever 80 and a front brake lever 82, a grip 84 and a throttle grip 86, and a lamp changeover switch 94 and a starter switch 91. The steering handle bar 78 is integrally held on the steering stem 74. The clutch lever 80 and the front brake lever 82 are mounted on the steering handle bar 78. The grip 84 and the throttle grip 86 are mounted at the opposite end portions of the steering handle bar 78. The lamp changeover switch 94 and the starter switch 91 are disposed on the throttle grip 86 side.

Here, the throttle grip 86 is used to provide, upon experience riding, an acceleration operation to the two-wheeled vehicle displayed on the display unit 58 in response to a throttle opening th obtained when the operator 30 turns the throttle grip 86 in a direction toward the operator 30 itself using its hand. On the other hand, upon reproduction, the throttle grip 86 is used to adjust the angle (depression angle) in the upward or downward direction of the eye point of the bird's eye view of an image displayed on the display unit 58 in response to the throttle opening th by the throttle grip 86.

Further, upon reproduction, the handle bar angle $\alpha$s by a pivoting operation of the steering handle bar 78 adjusts the angle (rotational angle) in a horizontal direction of the eye point of the bird's eye view. Furthermore, upon reproduction, the depression angle of the eye point of the bird's eye view of the image can be adjusted by operation of the gear change pedal 68. It is to be noted that, upon reproduction, the starter switch 91 which functions as screen image still stopping means can be used for changeover between forward feeding (normal reproduction) and reverse feeding (reverse reproduction) and between normal reproduction and temporary stopping (still screen image reproduction).

Actually, the operation amount of the throttle grip 86 (throttle opening th) is detected by a throttle opening sensor 88 in the form of a potentiometer, and the handle bar angle $\alpha$s of the steering handle bar 78 is detected by a handle bar angle sensor 90 in the form of a potentiometer. Meanwhile, the operation position of the starter switch 91 is detected by the starter switch 91 itself, and the position of the gear change pedal 68 is detected by a gear position switch 92 which is a switch. The throttle opening sensor 88, handle bar angle sensor 90, starter switch 91 and gear position switch 92 are connected to the interface board 54.

Further, the operation angle of the clutch lever 80 is detected by a clutch lever angle sensor 81 in the form of a potentiometer. The grasping power of the front brake lever 82 is detected by a front brake pressure sensor 83 in the form of a potentiometer.

The front brake lever 82 places the front wheel of the two-wheeled vehicle displayed on the display unit 58 into a braked state when the operator 30 grasps the front brake lever 82 so as to approach the throttle grip 86 side.

Various sensors 96 such as the front brake pressure sensor 83, a rear brake pressure sensor 71 and the lamp changeover switch (dimmer switch) 94 are connected to the interface board 54. The front brake pressure sensor 83 operates corresponding to an operation amount of the front brake lever 82. The rear brake pressure sensor 71 detects a rear brake pressure corresponding to an operation amount of the rear brake pedal 70. The lamp changeover switch (dimmer switch) 94 detects the position of a lamp (an off position, a high beam position and a low beam position).

The lamp changeover switch 94 is used, upon reproduction, as a changeover switch among a function of temporarily stopping the screen image, a function of fast feeding the screen image and a function of performing reproduction at a normal speed.

It is to be noted that the reactive force acting upon each of the steering handle bar 78 which forms the handle bar mechanism 62 of the simulated driving mechanism 52, gear change pedal 68, rear brake pedal 70, clutch lever 80, front brake lever 82, throttle grip 86 and so forth is provided by compressive force or tensile force of a spring which is not described with a reference character applied thereto.

As shown in FIG. 3, the interface board 54 and a CPU (Central Processing Unit) 100 of the apparatus body 60 of the control apparatus 56 are connected to each other by a cable (not shown in FIGS. 1 and 2) through an interface 102 such as a USB (universal serial bus).

A ROM (write-only memory) 106 in which control programs such as an OS and so forth are stored, a main memory 108 in the form of a RAM (Random Access Memory), a hard disk drive 110, a speaker 114, and a CGI generation apparatus 112 are connected in BUS 104 of a CPU 100. The hard disk drive 110 includes a riding information storage region 111 into which riding information data upon experience and so forth are stored. The hard disk drive 110 further stores a riding simulation program for performing various processes in response to a signal input from the simulated driving mechanism 52, data (landscape data, self-vehicle data, advice sentences, riding route data and so forth). The CGI generation apparatus 112 produces a bird's eye view screen image based on an image processing result of the CPU 100 and outputs the produced bird's eye view screen image to the display unit 58.

The speaker 114 functions, upon experience riding, as outputting means of effect sound but functions, upon reproduction, also as sound outputting means for reading aloud an advice sentence.

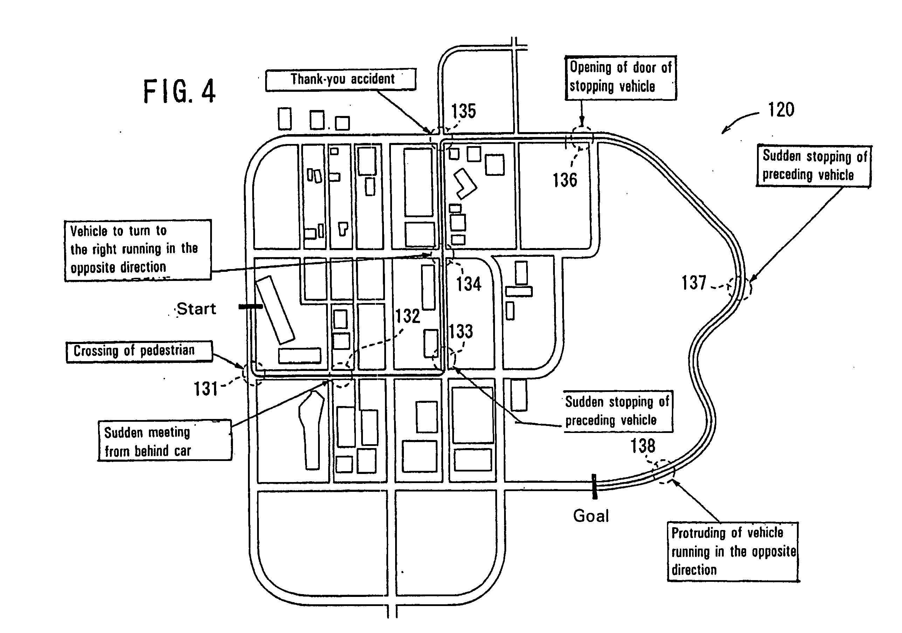

FIG. 4 shows a riding route (riding route data) 120 as an example stored in the hard disk drive 110 and having a plurality of guidance scenes determined in advance.

The riding route 120 includes eight guidance scenes 131 to 138 from a start point to a goal point.

The first guidance scene 131 is a scene for experience of crossing of a pedestrian; the next guidance scene 132 is a scene for experience of sudden meeting with a vehicle from behind; the guidance scene 133 is a scene for experience of sudden stopping of a preceding car; the guidance scene 134 is a scene for experience of turning to the right of a vehicle running in the opposite direction; the guidance scene 135 is a scene for experience of a so-called thank-you accident; the guidance scene 136 is a scene for experience of opening of a door of a stopping vehicle; the guidance scene 137 is a scene for experience of sudden stopping of a preceding car; and the last guidance scene 138 is a scene for experience of protruding of a vehicle running in the opposite direction.

Here, production of a bird's eye view screen to be displayed on the display unit 58 by the control apparatus 56 having the CGI generation apparatus 112 is described with reference to FIG. 5.

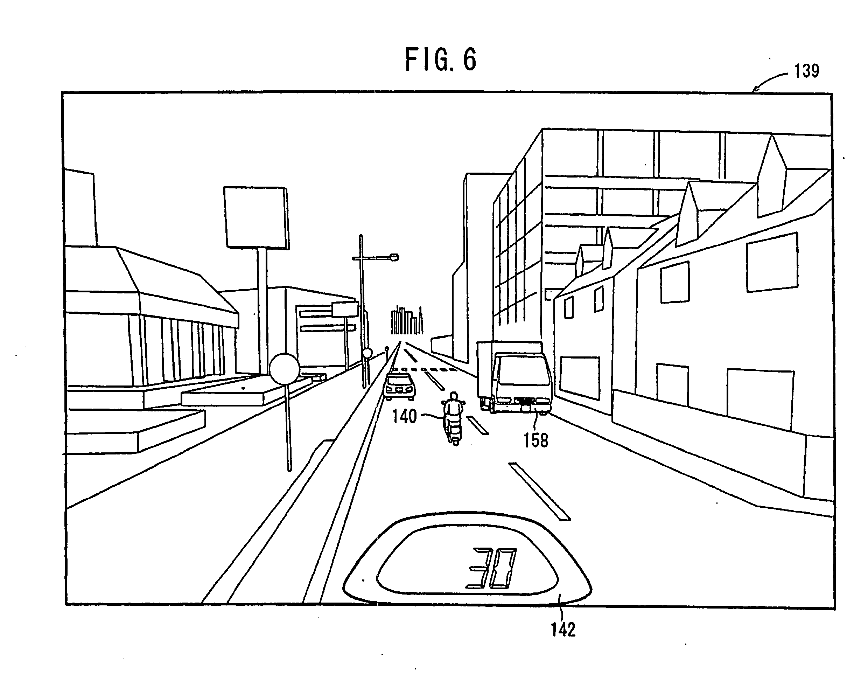

It is to be noted that FIG. 6 illustrates an example of a bird's eye view screen produced by the control apparatus 56 and the CGI generation apparatus 112. The bird's eye view screen 139 is a standard screen upon experience and upon reproduction. On the standard screen, a screen image of a self-vehicle 140 as viewed at a fixed distance from an obliquely rearwardly upward position, that is, as viewed in a bird's eye view, is disposed at the center of the screen of the image of the riding sight, and a screen image of an instrument panel 142 of the self-vehicle 140 is displayed on this side with respect to the screen image of the self-vehicle 140 at the center of the screen.

The numeral "30" on the instrument panel 142 denotes a riding speed. In addition to the riding speed, the operation amounts of the front and rear brakes are indicated each as the length of a bar graph, and the gear position number where a manual transmission is used, winkers as direction indicator lamps and so forth are displayed on the instrument panel 142.

Referring to FIG. 5 illustrating production of a bird's eye view screen image upon reproduction, the three X, Y and Z axes of the rectangular coordinate system are world coordinate axes, and the position M of the self-vehicle 140 is represented by M(Xm, Ym, Zm) and the advancing direction of the self-vehicle 140 is represented by an advancing direction $\psi m$ of the self-vehicle 140 with respect to the Y axis.

Here, the manner of determination of the eye point (eye point position, camera position) E and the depression angle (line-of-sight looking down angle) pe is described.

On the standard screen, the depression angle pe in the light-of-sight direction is directed toward the position at which the self-vehicle 140 exists such that the self-vehicle 140 is displayed at the center of the screen as seen in FIG. 6.

Referring to FIG. 5, reference character d denotes a horizontal distance from the self-vehicle 140 to the eye point E, and the horizontal distance d is decided to a fixed value of 15 [m] on the standard screen upon experience riding and upon reproduction (upon reproduction, the throttle opening th is set to the value 0 and the handle bar angle $\alpha s$ is set to 0 [°]). h(0 - 10 [m]) denotes the height of the eye point E and is determined by multiplying the throttle opening th (0 - 100 [%]) by a coefficient (in the present embodiment, 0.1). $\beta$ ($\pm 90$ [°]) denotes a rotational angle around the Z axis from the advancing direction $\psi m$ of the self-vehicle 140 and is determined by multiplying the handle bar angle $\alpha$ s ($\pm 30$ [°]) by a coefficient. The initial values are h = h0 (h0 is a minimum value of the eye point height h described below) and $\beta = 0$.

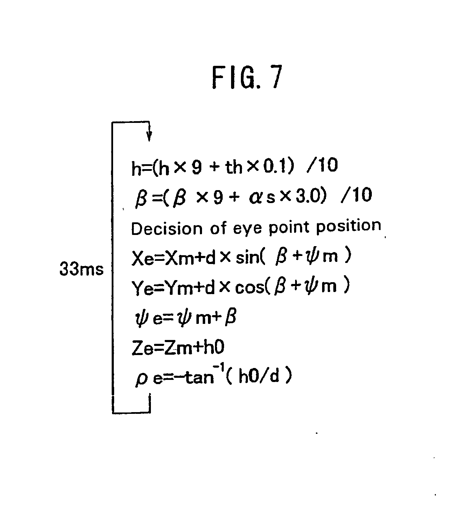

Then, for each 33 [ms], the throttle opening th and the handle bar angle $\alpha s$ are sampled and arithmetic operation illustrated in a flow of FIG. 7 is performed to determine the eye point E and the depression angle $\rho e$. Then, perspective projection conversion on a screen (coordinates) not shown having a normal to the line-of-sight direction (refer to FIG.

5) and the image display on the display unit 58 is updated.

In particular, the eye point height h and the rotational angle β are first determined in accordance with expressions (1) and (2).

Then, the X coordinate Xe of the eye point E is determined in accordance with an expression (3); the Y coordinate Ye with an expression (4); the angle ψe of the line of sight around the Z axis with an expression (5); the Z coordinate Ze with an expression (6); and the depression angle pe with an expression (7). It is to be noted that, in the present embodiment, the minimum value h0 of the eye point height h in the expression (6) is set to h0 = 1.3 [m] so that the eye point may not drop farther than the level.

$$h = (h \times 9 + th \times 0.1)/10 \qquad \ldots (1)$$

$$\beta = (\beta \times 9 + \alpha s \times 3.0)/10 \qquad \ldots (2)$$

$$Xe = Xm + d \times \sin(\beta + \psi m) \qquad \ldots (3)$$

$$Ye = Ym + d \times \cos(\beta + \psi m) \qquad \ldots (4)$$

$$\psi e = \psi m + \beta \qquad \ldots (5)$$

$$Ze = Zm + h0 \qquad \ldots (6)$$

$$pe = -\tan^{-1}(h0/d) \qquad \ldots (7)$$

The riding simulation apparatus 50 of the present embodiment is basically configured in such a manner as described above, and now, description is given in order of A. General operation upon experience riding operation (upon pseudo-experience) and B. Reproduction operation

A. General operation upon experience riding operation

After the power supply to the control apparatus 56 is made available and a riding route 120 is selected on an initial screen (not shown) on the display unit 58, experience riding operation (simulated driving operation) by the operator 30 is performed.

Upon experience riding operation, when the operator 30 operates the throttle grip 86, front brake lever 82 or clutch lever 80, output signals of the throttle opening sensor 88, front brake pressure sensor 83 and clutch lever angle sensor 81 are fetched into the CPU 100 of the apparatus body 60 of the control apparatus 56 through the interface board 54.

On the other hand, when the operator 30 operates the rear brake pedal 70, an output signal of the rear brake pressure sensor 71 is fetched into the CPU 100 of the control apparatus 56 similarly. Further, in response to an operation of the gear change pedal 68 performed together with the operation of the clutch lever 80, gear position information of the gear position switch 92 is fetched into the CPU 100 similarly.

When various operations are performed by the operator 30 in this manner, the CPU 100 arithmetically operates a riding state of the self-vehicle 140 on the real-time basis based on the data fetched from the various sensors 88, 90, 92 and 96 and controls the display unit 58 to display a screen image of the self-vehicle 140 based on the riding state together with a screen image of a landscape (buildings and riding road) and a screen image of the other vehicles. Further, the CPU 100 controls the speaker 114 to output effect sound corresponding to the image display.

In this manner, upon experience riding operation (upon simulated driving operation), the operator 30 can have a riding feeling proximate to that upon riding of an actual vehicle.

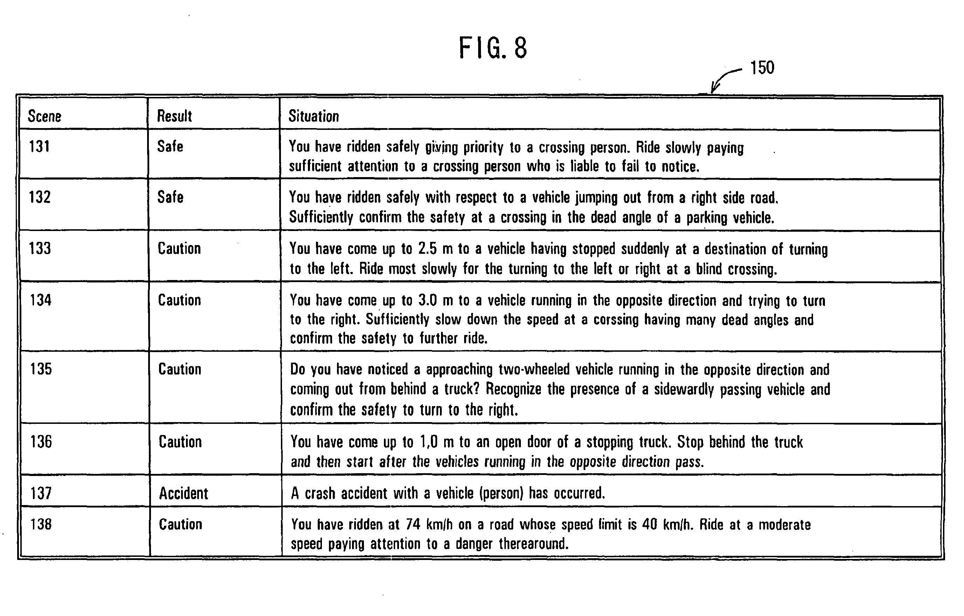

It is to be noted that an experience riding result table 150 (refer to FIG. 8) is stored in a time series for each 33 [ms] into the riding information storage region 111 of the hard disk drive 110 through the main memory 108. The experience riding result table 150 stores the position of the self-vehicle 140, the positions of the other vehicles, the situation of a traffic signal and the guidance scene number all used as basic information for generating a screen image and sound upon experience riding operation, and a guidance scene riding result obtained in connection with the basic information. The experience riding result table 150 further stores an advice sentence selected based on driving states upon experience riding operation {a state of whether the self-vehicle 140 is driven safely or driven unsafely (caution riding) and further of whether or not an accident happens}.

FIG. 8 illustrates the experience riding result table 150 regarding the riding route 120. In the experience riding result table 150, for example, since the experience riding operation result on the guidance scene 132 is "safe", a sentence "You have ridden safely with respect to a vehicle jumping out from a right side road. Sufficiently confirm the safety at a crossing in the dead angle of a parking vehicle." is selected as an advice sentence. It is to be noted that different sentences corresponding to "safe" (safe riding result), "caution" (unsafe riding result) and "accident" (unsafe riding result) of the experience riding operation result are stored on the hard disk drive 110 in advance. For example, if the experience running operation result is "caution" corresponding to an unsafe riding result, a sentence "You have operated the brake rather strong in response to a jumping out vehicle from a right side road. Sufficiently confirm the safety at a crossing in the dead angle of a parking vehicle. Please foresee a dangerous situation and try to drive so as not to necessitate sudden braking." is selected.

B. Reproduction operation

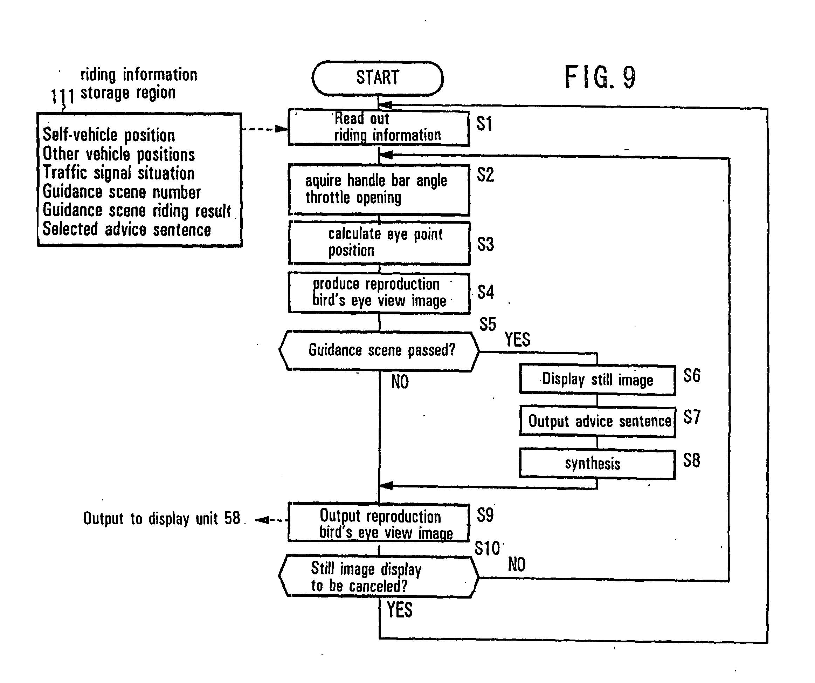

Subsequently, reproduction operation after an experience riding operation comes to an end (after a pseudo-experience comes to an end) is described with reference to a flow chart of FIG. 9. It is to be noted that the process according to the flow chart of FIG. 9 is repeated after each 33 [ms], and the image of the display unit 58 is updated after each 33 [ms]. The subject which executes the program of the flow chart is the CPU 100.

After reproduction operation is started in response to an operation of a predetermined switch by the operator 30, contents stored in the riding information storage region 111 are transferred to the main memory 108 by the CPU 100 to establish a state wherein high speed reading out by the CPU 100 is possible.

Therefore, at step S1 in the case wherein, for example, the lamp changeover switch 94 is set to a normal speed, riding information which is data necessary for production of a bird's eye view screen image at the present point of time is read out. In particular, the self-vehicle position, the other vehicle positions, a traffic signal situation, a guidance scene number and so forth are read out.

Then at step S2, in order to determine the depression angle pe of the bird's eye viewpoint, the throttle opening th which is an operation amount of the throttle grip 86 operated by the operator 30 is detected from the throttle opening sensor 88. Further, in order to determine the rotational angle $\beta$ of the bird's eye viewpoint, the handle bar angle $\alpha$s of the steering handle bar 78 operated by the operator 30 is detected from the handle bar angle sensor 90.

Then at step S3, the eye point E(Xe, Ye, Ze) and the depression angle pe are calculated using the expressions (1) to (7) given hereinabove.

Then, based on results of the calculation, a reproduction bird's eye view screen image is produced by the CGI generation apparatus 112 and perspective projection conversion is performed, and a resulting image is expanded in the image memory of the CPU 100 itself.

Then at step S5, the CPU 100 refers to the guidance scene riding result in the riding information storage region 111 expanded in the main memory 108 to confirm whether or not the reproduction bird's eye view screen image is a screen image upon passage of one of the guidance scenes 131 to 138.

If the reproduction bird's eye view image is an image upon passage of one of the guidance scenes 131 to 138, that is, if the discrimination process at step S5 results in the affirmative discrimination, then the reproduction is placed into a temporarily stopping state and a displaying state of a still screen image is established at step S6.

Then at step S7, the experience riding result table 150 is referred to to select an advice sentence corresponding to the experience riding result of the pertaining guidance scene. Then at step S8, the selected advice sentence is synthesized with the reproduction bird's eye view screen image produced at step S4 on the screen image memory by the CGI generation apparatus 112.

Then at step S9, a bird's eye view screen image for normal reproduction (in the case where the discrimination at step S5 is in the negative) or the bird's eye view screen image for still screen image display on which the advice sentence is synthesized is outputted to the display unit 58. At this time, the advice sentence is read aloud by voice and outputted from the speaker 114.

In this manner, in the present embodiment, when the result of the discrimination process at step S5 is in the affirmative and a screen of a bird's eye view screen image with which an advice sentence is synthesized, that is, a guidance scene, is displayed on the display unit 58, the reproduction process is compulsorily placed into a temporarily stopping state (still screen image displaying state) at step S6 taking it into consideration to make it possible for the screen to be observed well by the operator 30 and to make the confirmation by the operator 30 easy.

Then at next step S10, the process at step S1 for the reading out process for riding information at a next point of time (for production of a next reproduction bird's eye view screen image) is bypassed unless a still screen image display cancellation operation, that is, a cancellation operation by the starter switch 91, is performed, and the processes beginning with the detection process of the handle bar angle $\alpha$s and the throttle opening th at step S2 are repeated. Consequently, also in a still state, the bird's eye view eye point can be changed over continuously and infinitely by operations of the steering handle bar 78 and the throttle grip 86. By this, an experience riding state can be confirmed from a desired bird's eye view eye point at a desired guidance scene. In this instance, it is otherwise possible to vary the eye point position stepwise by setting arbitrary position displacement conditions in the program in advance. Where the eye point position is varied stepwise, driving of the operator from the eye point position can be observed efficiently.

It is to be noted that, if, upon passage of a guidance scene (when the discrimination at step S5 is in the affirmative), temporary stopping reproduction at step S6 or reproduction at the normal speed with step S6 omitted is performed but, when a guidance scene is not passed (when the discrimination at step S5 is in the negative), fast feeding reproduction or skip reproduction is performed, then only the guidance scene screen images can be confirmed in a concentrated manner and the total reproduction time can be reduced. In other words, guidance results on the guidance scenes 131 to 138 on the riding route 120 can be obtained in a short period of time.

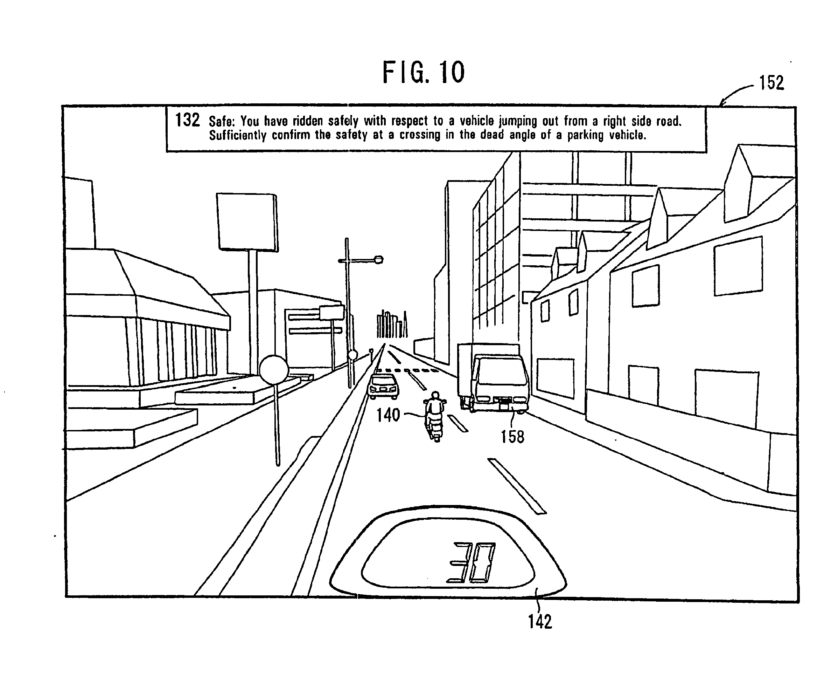

FIG. 10 shows a reproduction screen 152 wherein an advice sentence at the guidance scene 132 (where the experience riding result is safe) and a bird's eye view screen image are synthesized with each other as an example. The reproduction screen 152 is a standard screen where the handle bar angle $\alpha$s = 0 [°] and the throttle opening th = value 0.

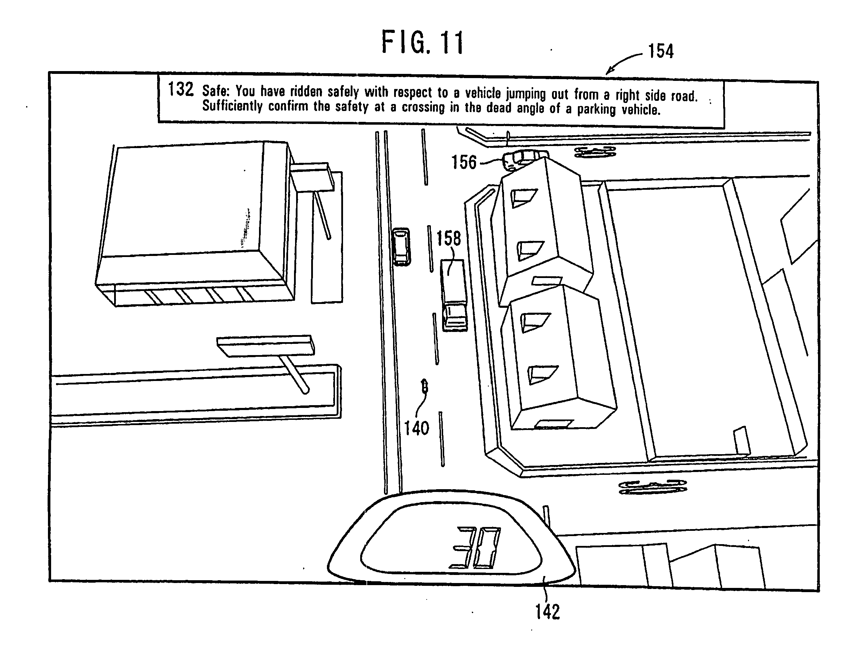

FIG. 11 shows a reproduction screen 154 from an eye point at a higher position when the throttle grip 86 is operated to increase the throttle opening th than that on the reproduction screen 152 in the temporary stopping state of the standard screen. From the reproduction screen 154, it can be seen that a vehicle 156 which may jump out from a right side road is hidden behind a vehicle 158 running in the opposite direction and therefore is positioned at the position of the dead angle from the self-vehicle 140, that is, from the driver of the two-wheeled vehicle who is the operator 30.

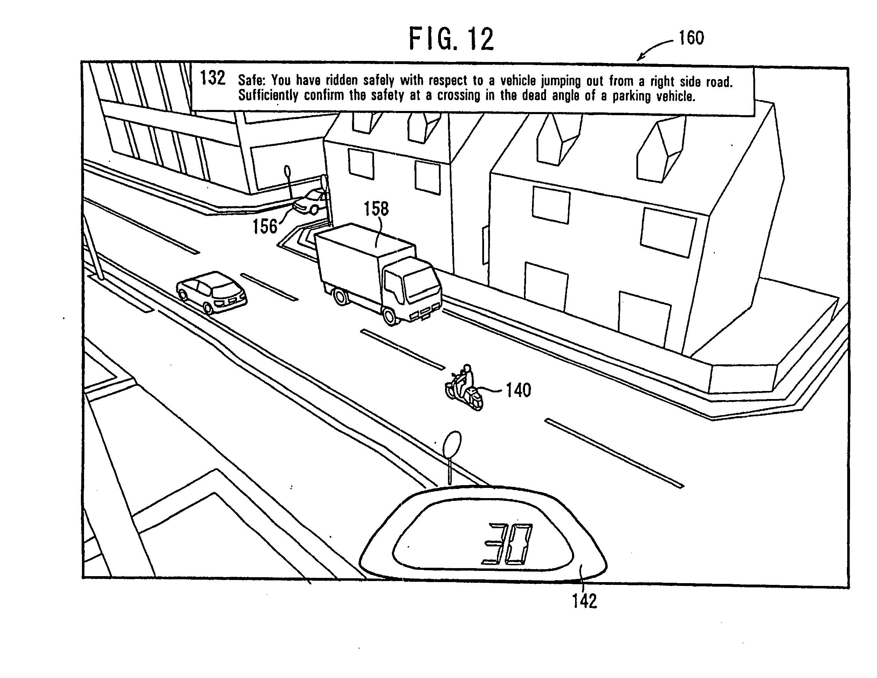

A reproduction screen 160 obtained when the throttle grip 86 is returned a little and the steering handle bar 78 is turned in the rightward direction is shown in FIG. 12. Also from the reproduction screen 160, the jumping out vehicle 156 positioned at the dead angle from the self-vehicle 140 behind the vehicle 158 running in the opposite direction can be confirmed.

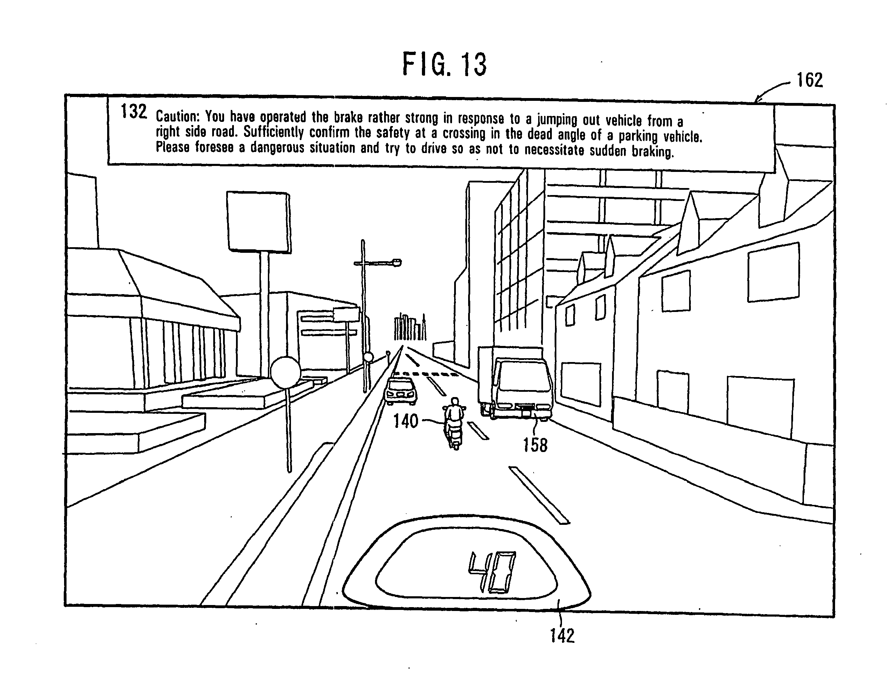

It is to be noted that FIG. 13 shows a reproduction screen 162 wherein an advice sentence at the guidance scene 132 (when the experience running result is unsafe) and a bird's eye view screen image are synthesized.

According to the embodiment described above, a riding simulation apparatus 50 wherein a riding sight is displayed as a screen image on a display unit 58 based on a driving operation of a simulated driving mechanism 52 by an operator 30 to allow the operator 30 to pseudo-experience the riding state of a two-wheeled vehicle and a riding situation is reproduced on the display unit 58 after the pseudo-experience comes to an end includes means (a CPU) 100 for selecting an advice sentence from a simulated riding result by the driving operation of the operator 30 on a guidance scene 131 to 138 determined in advance in a running route upon the pseudo-experience, and means (the CPU 100) for displaying the riding sight and the advice sentence simultaneously when the guidance scene 131 to 138 is passed upon reproduction on the display unit 58. Therefore, when the guidance scene 131 to 138 is passed upon reproduction on the display unit 58, the operator 30 can confirm the riding sight and the advice sentence simultaneously. Accordingly, understanding of the operator 30 is facilitated and a high degree of persuasion is obtained.

In this instance, where the means (CPU 100) for selecting an advice sentence selects only a scene (133 to 138) at which an unsafe action such as "caution" or "accident" was performed from within the simulated running result by the driving operation of the operator 30 on the guidance scene 131 to 138 and an advice sentence (refer to FIG. 8) and the means for displaying the riding sight and the advice sentence simultaneously displays only the scene 133 to 138 at which the unsafe action was performed such as the reproduction screen 162 shown in FIG. 13 upon reproduction on the display unit 58 while the other screens 131 and 132 and the riding screen image area skipped, the operator 30 can observe only a scene on which the guidance is required. Consequently, the time required for the guidance can be reduced.

In particular, according to the present embodiment, in the riding simulation apparatus 50 for a two-wheeled vehicle, upon pseudo-experience riding, an advice sentence corresponding to a simulated riding result by a driving operation of an operator 30 at a guidance scene determined in advance in a riding route is selected and stored. Then, upon displaying of a reproduction screen image of the pseudo-experience riding on the display unit 58, when the guidance scene determined in advance is passed, a riding sight of the guidance scene and the selected advice sentence are automatically displayed as a reproduction screen 154 simultaneously.

With the configuration described, the operator can be guided with a simple configuration without utilizing an instructor apparatus formed from a personal computer as in the prior art. Therefore, the cost can be reduced, Besides, understanding of the operator 30 is facilitated and a high degree of persuasion can be achieved. Naturally, even if an instructor is absent, the operator can be guided.

The invention efficiently obtains a guidance scene and an advice upon reproduction displaying of experience riding in a riding simulation apparatus for a two-wheeled vehicle.

In the invention, upon pseudo-experience riding, an advice sentence corresponding to a simulated riding result by a driving operation of an operator at a guidance scene determined in advance in a riding route is selected and stored. Then, upon displaying of a reproduction screen image of the experience riding on a display unit, when the guidance scene determined in advance is passed, a riding sight of the guidance scene and the selected advice sentence are automatically displayed as a reproduction screen 154 simultaneously.

**Claims**

1. A riding simulation apparatus (2, 50)
   which is adapted to display, in a simulated driving operation mode, a riding sight as a screen image on a display unit (22, 58) based on driving operation output signals of a simulated driving mechanism (52) by an operator (30) as a riding situation allowing the operator (30) to pseudo-experience the riding state of a two-wheeled vehicle (32) and to store information of the riding situation in a main memory (108), and
   which is adapted to reproduce, in a reproduction operation mode which is started in response to an operation of a switch by the operator (30), the stored riding situation on said display unit (22, 58) at a guidance scene (131 - 138) determined in advance for a running route (120) taken during the simulated driving operation mode after simulated driving operation mode has come to an end,
   wherein the simulated driving mechanism (52) includes a steering handle bar (78) and a throttle grip (86) mounted on one end of the steering handle bar (78) to provide an acceleration operation to the two-wheeled vehicle displayed on the display unit (22, 58) during the simulated driving operation mode,
   wherein the angle in upward and downward direction of the eye point of a bird's eye view of the guidance scene (131-138) displayed on the display unit (22, 58) is adjusted in response to operation of the throttle grip (86) during the reproduction mode,
   wherein the riding simulation apparatus (2, 50) further comprises selecting means (100) adapted to select information to one of a plurality of predetermined advice sentences based on the stored information of the riding situation to simultaneously display the selected advice sentence and the guidance scene (131-138) on said display unit (22, 58) during the reproduction operation mode.

2. A riding simulation apparatus according to claim 1, wherein
   said selecting means (100) selects only a scene (133 - 138) at which an unsafe action was performed from within the simulated running result by the driving operation of the operator (30) on the guidance scene (131-138) and an advice sentence, and
   said display means (154) displays only the scene (133 - 138) at which the unsafe action was performed.

3. A riding simulation apparatus according to claim 1 or 2, further comprising
   reading means (100, 114) for reading aloud the advice sentence by voice upon reproduction on said display unit (22, 58).

4. A riding simulation apparatus according to any one of claims 1 or 3,
   wherein
   said display means (154) temporarily stops the reproduction and displays a still screen image when the rider's view and the advice sentence are displayed simultaneously upon reproduction on said display unit (22, 58).

5. A riding simulation apparatus according to any one of claims 1 to 4,
   wherein
   said display means (154) reproduces the screen image at a normal reproduction speed or temporarily stops the reproduction and displays a still screen image at the guidance scene (131 - 138) but performs fast-feeding reproduction or skipping reproduction at any scene other than the guidance scene (131 - 138).

6. A riding simulation process wherein,
   in a simulated driving operation mode, a riding sight is displayed as a screen image on a display unit (22, 58) based on driving operation output signals of a simulated driving mechanism (52) by an operator (30) as a riding situation allowing the operator (30) to pseudo-experience the riding state of a two-wheeled vehicle (32) and to store the information of the riding situation in a main memory (108), and,

in a reproduction operation mode which is started in response to an operation of a switch by the operator (30), the stored riding situation is reproduced on said display unit (22, 58) at a guidance scene (131 - 138) determined in advance for a running route taken during the simulated driving operation mode, after the simulated driving operation mode has come to an end,

wherein the simulated driving mechanism (52) includes a steering handle bar (78) and a throttle grip (86) mounted on one end of the steering handle bar (78) to provide an acceleration operation to the two-wheeled vehicle displayed on the display unit (22, 58) during the simulated driving operation mode,

wherein the angle in upward and downward direction of the eye point of a bird's eye view of the guidance scene (131-138) displayed on the display unit (22, 58) is adjusted in response to operation of the throttle grip (86) during the reproduction mode,

wherein information to one of a plurality of predetermined advice sentences is selected based on the stored information of the riding situation to simultaneously display the selected advice structure and the guidance scene (131-138) on said display unit (22, 58) during the reproduction operation mode.

7. A riding simulation process according to claim 6, wherein
in selecting an advice sentence, only a scene (133 - 138) is selected at which an unsafe action was performed from within the simulated
running result by the driving operation of the operator (30) on the guidance scene (131 - 138) and an advice sentence, and
in displaying the rider's view and the advice sentence simultaneously only the scene (133 - 138) is displayed at which the unsafe action was performed.

8. A riding simulation process according to claim 6 or 7, further comprising
reading aloud the advice sentence by voice upon reproduction on said display unit (22, 58).

9. A riding simulation process according to any one of claims 6 or 8,
wherein
the reproduction is stopped temporarily and a still screen image is displayed when the rider's view and the advice sentence are displayed simultaneously upon reproduction on said display unit (22, 58).

10. A riding simulation process according to any one of claims 6 to 9,
wherein
the screen image is reproduced at a normal reproduction speed or the reproduction is stopped temporarily and a still screen image is displayed at the guidance scene (131 - 138) but a fast-feeding reproduction or skipping reproduction is performed at any scene other than the guidance scene (131 -138).

**Patentansprüche**

1. Fahrsimulationsvorrichtung (2, 50),
die ausgelegt ist, um in einem simulierten Fahrbetriebsmodus eine Fahrersicht als Bildschirmbild auf einer Anzeigeeinheit (22, 58) basierend auf Fahrbetriebsausgangssignalen eines Fahrsimulationsmechanismus (52) durch einen Bediener (30) als Fahrsituation anzuzeigen, die es dem Bediener (30) erlaubt, den Fahrzustand eines Zweiradfahrzeugs (32) pseudomäßig zu erfahren, und um Information der Fahrsituation in einem Hauptspeicher (108) zu speichern, und
die ausgelegt ist, um in einem Wiedergabebetriebsmodus, der in Antwort auf eine Betätigung eines Schalters durch den Bediener (30) gestartet wird, die gespeicherte Fahrsituation auf der Anzeigeeinheit (22, 58) an einer Führungsszene (131 - 138) wiederzugeben, die vorab für eine Fahrroute (120) bestimmt ist, die während des simulierten Fahrbetriebsmodus genommen wurde, nachdem der simulierte Fahrbetriebsmodus zu einem Ende gekommen ist, worin der Fahrsimulationsmechanismus (52) eine Lenkstange (78) und einen am einen Ende der Lenkstange (78) angebrachten Drosselgriff (86) enthält, um während des simulierten Fahrbetriebsmodus dem auf der Anzeigeeinheit (22, 58) angezeigten Zweiradfahrzeug einen Beschleunigungsbetrieb zu geben, worin während des Wiedergabemodus der Winkel in Aufwärts- und Abwärtsrichtung des Augpunkts einer Vogelperspektive der Führungsszene (131 - 138), die auf der Anzeigeeinheit (22, 58) angezeigt wird, in Antwort auf die Betätigung des Drosselgriffs (86) eingestellt wird, worin die Fahrsimulationsvorrichtung (2, 50) ferner umfasst: ein Wählmittel (100), das ausgelegt ist, um Information zu einer einer Mehrzahl von vorbestimmten Beratungssätzen basierend auf der gespeicherten Information der Fahrsituation auszuwählen, um während des Wiedergabebetriebsmodus den gewählten Beratungssatz und die Führungsszene (131 - 138) auf der Anzeigeeinheit (22, 58) gleichzeitig anzuzeigen.

2. Fahrsimulationsvorrichtung nach Anspruch 1, worin das Wählmittel (100) nur eine Szene (133 - 138), bei der eine unsichere Aktion durchgeführt wurde, aus dem simulierten Fahrergebnis durch die Fahrbedienung des Fahrers (30) auf der Führungsszene (131 - 138) und einen Beratungssatz auswählt, und
das Anzeigemittel (154) nur die Szene (133 - 138) anzeigt, bei der die unsichere Aktion durchgeführt wurde.

3. Fahrsimulationsvorrichtung nach Anspruch 1 oder 2, die ferner ein Lesemittel (100, 114) aufweist, um bei Wiedergabe auf der Anzeigeeinheit (22, 58) den Beratungssatz stimmlich laut zu lesen.

4. Fahrsimulationsvorrichtung nach einem der Ansprüche 1 bis 3, worin das Anzeigemittel (154) die Wiedergabe vorübergehend stoppt und ein stilles Bildschirmbild anzeigt, wenn bei der Wiedergabe auf der Anzeigeeinheit (22, 58) die Fahrersicht und der Beratungssatz gleichzeitig angezeigt werden.

5. Fahrsimulationsvorrichtung nach einem der Ansprüche 1 bis 4, worin das Anzeigemittel (154) das Bildschirmbild bei normaler Wiedergabegeschwindigkeit wiedergibt oder die Wiedergabe vorübergehend stoppt und ein stilles Bildschirmbild mit der Führungsszene (131 - 138) anzeigt, aber eine Schnelldurchlaufwiedergabe oder eine Sprungwiedergabe bei jeder anderen Szene als die Führungsszene (131 - 138) durchführt.

6. Fahrsimulationsverfahren, worin
in einem simulierten Fahrbetriebsmodus eine Fahrersicht als Bildschirmbild auf einer Anzeigeeinheit (22, 58) basierend auf Fahrbetriebsausgangssignalen eines Fahrsimulationsmechanismus (52) durch einen Bediener (30) als Fahrsituation angezeigt wird, die es dem Bediener (30) erlaubt, den Fahrzustand eines Zweiradfahrzeugs (32) pseudomäßig zu erfahren, und um Information der Fahrsituation in einem Hauptspeicher (108) zu speichern, und
in einem Wiedergabebetriebsmodus, der in Antwort auf eine Betätigung eines Schalters durch den Bediener (30) gestartet wird, die gespeicherte Fahrsituation auf der Anzeigeeinheit (22, 58) an einer Führungsszene (131 - 138) wiedergegeben wird, die vorab für eine Fahrroute bestimmt ist, die während des simulierten Fahrbetriebsmodus genommen wurde, nachdem der simulierte Fahrbetriebsmodus zu einem Ende gekommen ist,
worin der Fahrsimulationsmechanismus (52) eine Lenkstange (78) und einen am einen Ende der Lenkstange (78) angebrachten Drosselgriff (86) enthält, um während des simulierten Fahrbetriebsmodus dem auf der Anzeigeeinheit (22, 58) angezeigten Zweiradfahrzeug einen Beschleunigungsbetrieb zu geben,
worin während des Wiedergabemodus der Winkel in Aufwärts- und Abwärtsrichtung des Augpunkts einer Vogelperspektive der Führungsszene (131 -138), die auf der Anzeigeeinheit (22, 58) angezeigt wird, in Antwort auf die Betätigung des Drosselgriffs (86) eingestellt wird, worin die Fahrsimulationsvorrichtung (52) ferner umfasst:

worin Information zu einer einer Mehrzahl von vorbestimmten Beratungssätzen basierend auf der gespeicherten Information der Fahrsituation ausgewählt wird, um während des Wiedergabebetriebsmodus den gewählten Beratungssatz und die Führungsszene (131 - 138) auf der Anzeigeeinheit (22, 58) gleichzeitig anzuzeigen.

7. Fahrsimulationsverfahren nach Anspruch 6, worin beim Wählen eines Beratungssatzes nur eine Szene (133 - 138), bei der eine unsichere Aktion durchgeführt wurde, aus dem simulierten Fahrergebnis durch die Fahrbedienung des Fahrers (30) auf der Führungsszene (131 - 138) und einen Beratungssatz ausgewählt wird, und
beim gleichzeitigen Anzeigen der Fahrersicht und des Beratungssatzes nur die Szene (133 - 138) angezeigt wird, bei der die unsichere Aktion durchgeführt wurde.

8. Fahrsimulationsverfahren nach Anspruch 6 oder 7, das ferner umfasst: lautes stimmliches Lesen des Beratungssatzes bei Wiedergabe auf der Anzeige (22, 58).

9. Fahrsimulationsverfahren nach einem der Ansprüche 6 oder 8, worin die Wiedergabe vorübergehend gestoppt und ein stilles Bildschirmbild angezeigt wird, wenn die Fahrersicht und der Beratungssatz bei der Wiedergabe auf der Anzeigeeinheit (22, 58) gleichzeitig angezeigt werden.

10. Fahrsimulationsverfahren nach einem der Ansprüche 6 bis 9, worin das Bildschirmbild bei normaler Wiedergabegeschwindigkeit wiedergegeben oder die Wiedergabe vorübergehend gestoppt wird und ein stilles Bildschirmbild mit einer Führungsszene (131 - 138) angezeigt wird, aber eine Schnelldurchlaufwiedergabe oder eine Sprungwiedergabe bei jeder anderen Szene als die Führungsszene (131 - 138) durchgeführt wird.

**Revendications**

1. Un simulateur de conduite (2, 50)
qui est destiné à afficher, dans un mode de fonctionnement de conduite simulée, une vision de conduite comme une image d'écran sur une unité d'affichage (22,58) basée sur des signaux de sortie de fonctionnement de conduite d'un mécanisme de conduite simulée (52) par un opérateur (30) comme une situation de conduite permettant à l'opérateur (30) de pseudo-expérimenter l'état de conduite d'un véhicule à deux roues (32) et d'enregistrer des informations de la situation de conduite dans une mémoire principale (108), et
qui est destiné à reproduire, dans un mode de fonctionnement de reproduction qui est lancé en réponse à l'actionnement d'un commutateur par l'opérateur (30), la situation de conduite enregistrée sur ladite unité d'affichage (22,58) au niveau d'une scène de guidage (131 - 138) déterminée à l'avance pour un itinéraire (120) emprunté pendant le mode de fonctionnement de conduite simulée après que le mode de fonctionnement de conduite simulée a pris fin,
dans lequel le mécanisme de conduite simulée (52) comprend un guidon de pilotage (78) et une poignée des gaz (86) montée à une extrémité du guidon de pilotage (78) pour fournir un fonctionnement d'accélération du véhicule à deux roues affiché sur l'unité d'affichage (22,58) pendant le mode de fonctionnement de conduite simulée,
dans lequel l'angle en direction vers le haut et vers le bas du regard d'une vue à vol d'oiseau de la scène de guidage (131 - 138) affichée sur l'unité d'affichage (22,58) est ajusté en réponse à l'actionnement de la manette des gaz (86) pendant le mode de reproduction,
dans lequel le simulateur de conduite (2, 50) comprend par ailleurs des moyens de sélection (100) destinés à sélectionner les informations d'un des plusieurs conseils préalablement déterminés basés sur les informations enregistrées de la situation de conduite pour afficher simultanément le conseil choisi et la scène de guidage (131 - 138) sur ladite unité d'affichage (22,58) pendant le mode de fonctionnement de reproduction.

2. Un simulateur de conduite selon la revendication 1, dans lequel lesdits moyens de sélection (100) choisissent seulement une scène (133 - 138) au cours de laquelle une action dangereuse a été effectuée dans le résultat de conduite simulée par la conduite de l'opérateur (30) sur la scène de guidage (131 - 138) et un conseil et lesdits moyens d'affichage (154) affichent seulement la scène (133 - 138) au cours de laquelle l'action dangereuse a été réalisée.

3. Un simulateur de conduite selon l'une des revendications 1 ou 2, comprenant par ailleurs
des moyens de lecture (100,114) pour la lecture à voix haute du conseil par une voix lors de la reproduction sur ladite unité d'affichage (22,58).

4. Un simulateur de conduite selon l'une des revendications 1 ou 3, dans lequel lesdits moyens d'affichage (154) interrompent temporairement la reproduction et affichent une image d'écran arrêtée lorsque la vue du pilote et le conseil sont affichés simultanément lors de la reproduction sur ladite unité d'affichage (22,58).

5. Un simulateur de conduite selon l'une des revendications 1 à 4 dans lequel,
lesdits moyens d'affichage (154) reproduisent l'image d'écran à une vitesse de reproduction normale ou arrêtent temporairement la reproduction et affichent une image d'écran arrêtée sur la scène de guidage (131 - 138) mais effectuent une reproduction accélérée ou une reproduction par saut de toute scène autre que la scène de guidage (131

- 138).

6. Un procédé de simulation de conduite dans lequel
dans un mode de fonctionnement de conduite simulée, une vision de conduite est affichée comme une image d'écran sur une unité d'affichage (22,58) basée sur des signaux de sortie de fonctionnement de conduite d'un mécanisme de conduite simulée (52) par un opérateur (30) comme une situation de conduite permettant à l'opérateur (30) de pseudo-expérimenter l'état de conduite d'un véhicule à deux roues (32) et d'enregistrer des informations de la situation de conduite dans une mémoire principale (108), et
dans un mode de fonctionnement de reproduction qui est lancé en réponse à l'actionnement d'un commutateur par l'opérateur (30), la situation de conduite enregistrée est reproduite sur ladite unité d'affichage (22,58) au niveau d'une scène de guidage (131 - 138) déterminée à l'avance pour un itinéraire emprunté pendant le mode de fonctionnement de conduite simulée après que le mode de fonctionnement de conduite simulée a pris fin,

dans lequel le mécanisme de conduite simulée (52) comprend un guidon de pilotage (78) et une poignée des gaz (86) montée à une extrémité du guidon de pilotage (78) pour fournir un fonctionnement d'accélération du véhicule à deux roues affiché sur l'unité d'affichage (22,58) pendant le mode de fonctionnement de conduite simulée,

dans lequel l'angle en direction vers le haut et vers le bas du regard d'une vue à vol d'oiseau de la scène de guidage (131 - 138) affichée sur l'unité d'affichage (22,58) est ajusté en réponse à l'actionnement de la manette des gaz (86) pendant le mode de reproduction,

dans lequel le choix des informations pour l'un des plusieurs conseils préalablement déterminés est basé sur les informations enregistrées de la situation de conduite pour afficher simultanément la structure de conseil choisie et la scène de guidage (131 - 138) sur ladite unité d'affichage (22,58) pendant le mode de fonctionnement de reproduction.

7. Un procédé de simulation de conduite selon la revendication 6, dans lequel lors de la sélection d'un conseil, seule une scène (133 - 138) au cours de laquelle une action dangereuse a été effectuée dans le résultat de conduite simulée par la conduite de l'opérateur (30) sur la scène de guidage (131 - 138) est choisie et un conseil et lors de l'affichage simultané de la vision du pilote et du conseil, est seule affichée la scène (133 - 138) au cours de laquelle l'action dangereuse a été réalisée.

8. Un procédé de simulation de conduite selon l'une des revendications 6 ou 7, comprenant par ailleurs la lecture à voix haute du conseil par une voix lors de la reproduction sur ladite unité d'affichage (22,58).

9. Un procédé de simulation de conduite selon l'une des revendications 6 ou 8, dans lequel la reproduction est interrompue temporairement et une image d'écran arrêtée est affichée lorsque la vue du pilote et le conseil sont affichés simultanément lors de la reproduction sur ladite unité d'affichage (22,58).

10. Un procédé de simulation de conduite selon l'une des revendications 6 à 9 dans lequel, l'image d'écran est reproduite à une vitesse de reproduction normale ou la reproduction est arrêtée temporairement et une image d'écran arrêtée est affichée sur la scène de guidage (131 - 138) mais une reproduction accélérée ou une reproduction par saut est effectuée sur toute scène autre que la scène de guidage (131 - 138).

# FIG. 1

FIG. 2

FIG. 3

FIG. 4

120

Sudden stopping of preceding vehicle

Opening of door of stopping vehicle

Protruding of vehicle running in the opposite direction

137

138

Sudden stopping of preceding vehicle

Goal

136

135

134

133

132

131

Thank-you accident

Vehicle to turn to the right running in the opposite direction

Start

Crossing of pedestrian

Sudden meeting from behind car

FIG. 5

Eye point E (Xe, Ye, Ze)

Vertical height h

Rotation

Self-vehicle riding in direction $\psi m$

$\beta$

$\psi e$

$\rho e$

Far-near

Line-of-sight direction

d

140

M (Xm, Ym, Zm)

$\psi m$

x

y

z

# FIG. 6

EP 1 447 783 B1

# FIG. 7

$h=(h \times 9 + th \times 0.1) / 10$

$\beta = (\beta \times 9 + \alpha s \times 3.0) / 10$

Decision of eye point position

$Xe=Xm+d \times \sin(\beta + \psi m)$

$Ye=Ym+d \times \cos(\beta + \psi m)$

$\psi e = \psi m + \beta$

$Ze=Zm+h0$

$\rho e = -\tan^{-1}(h0/d)$

33ms

# FIG. 8

150

| Scene | Result | Situation |
|-------|--------|-----------|
| 131 | Safe | You have ridden safely giving priority to a crossing person. Ride slowly paying sufficient attention to a crossing person who is liable to fail to notice. |
| 132 | Safe | You have ridden safely with respect to a vehicle jumping out from a right side road. Sufficiently confirm the safety at a crossing in the dead angle of a parking vehicle. |
| 133 | Caution | You have come up to 2.5 m to a vehicle having stopped suddenly at a destination of turning to the left. Ride most slowly for the turning to the left or right at a blind crossing. |
| 134 | Caution | You have come up to 3.0 m to a vehicle running in the opposite direction and trying to turn to the right. Sufficiently slow down the speed at a corssing having many dead angles and confirm the safety to further ride. |
| 135 | Caution | Do you have noticed a approaching two-wheeled vehicle running in the opposite direction and coming out from behind a truck? Recognize the presence of a sidewardly passing vehicle and confirm the safety to turn to the right. |
| 136 | Caution | You have come up to 1.0 m to an open door of a stopping truck. Stop behind the truck and then start after the vehicles running in the opposite direction pass. |
| 137 | Accident | A crash accident with a vehicle (person) has occurred. |
| 138 | Caution | You have ridden at 74 km/h on a road whose speed limit is 40 km/h. Ride at a moderate speed paying attention to a danger therearound. |

EP 1 447 783 B1

riding information
**111** storage region

Self-vehicle position
Other vehicle positions
Traffic signal situation
Guidance scene number
Guidance scene riding result
Selected advice sentence

START

FIG. 9

Read out
riding information — S1

aquire handle bar angle
throttle opening — S2

calculate eye point
position — S3

produce reproduction
bird's eye view image — S4

S5
Guidance scene passed? — YES

NO

Display still image — S6

Output advice sentence — S7

synthesis — S8

Output to display unit 58 ◄--- Output reproduction
bird's eye view image — S9

S10
Still image display
to be canceled? — NO

YES

EP 1 447 783 B1

# FIG. 10

**132** Safe: You have ridden safely with respect to a vehicle jumping out from a right side road. Sufficiently confirm the safety at a crossing in the dead angle of a parking vehicle.

## FIG. 11

154

132 Safe: You have ridden safely with respect to a vehicle jumping out from a right side road.
Sufficiently confirm the safety at a crossing in the dead angle of a parking vehicle.

156

158

140

142

## FIG. 12

132 **Safe:** You have ridden safely with respect to a vehicle jumping out from a right side road. Sufficiently confirm the safety at a crossing in the dead angle of a parking vehicle.

EP 1 447 783 B1

## FIG. 13

132 Caution: You have operated the brake rather strong in response to a jumping out vehicle from a right side road. Sufficiently confirm the safety at a crossing in the dead angle of a parking vehicle. Please foresee a dangerous situation and try to drive so as not to necessitate sudden braking.

162

140

158

142

40

EP 1 447 783 B1

FIG. 14

EP 1 447 783 B1

**EP 1 447 783 B1**

**REFERENCES CITED IN THE DESCRIPTION**

**Patent documents cited in the description**

- JP 2002297017 A
- US 5125843 A
- EP 1142617 A1
- WO 9202916 A
- DE 4226776 A